(19) **Europäisches Patentamt**

**European Patent Office**

**Office européen des brevets**

(11) **EP 0 887 372 B1**

(12) **EUROPEAN PATENT SPECIFICATION**

(45) Date of publication and mention
of the grant of the patent:
**20.08.2003 Bulletin 2003/34**

(51) Int Cl.⁷: **C08K 3/04**, C08L 17/00, C08J 11/10

(21) Application number: **97109846.2**

(22) Date of filing: **17.06.1997**

(54) **Devulcanized rubber, method of manufacturing devulcanized rubber, and method of manufacturing reclaimed molded rubber products from devulcanized rubber**

Devulkanisiertes Kautschuk, Verfahren zu deren Herstellung und Verfahren zur Herstellung von geformten regenerierten Gummigegenständen daraus

Caoutchouc dévulcanisé, procédé de production et procédé de fabrication d'objets moulés en caoutchouc régénéré à partir de caoutchouc dévulcanisé

(84) Designated Contracting States:
**AT BE DE ES FR GB IT NL SE**

(43) Date of publication of application:
**30.12.1998 Bulletin 1998/53**

(73) Proprietors:
- **KABUSHIKI KAISHA TOYOTA CHUO KENKYUSHO**
  **Aichi-gun Aichi-ken, 480-11 (JP)**
  Designated Contracting States:
  **AT BE DE ES FR GB NL**
- **TOYOTA JIDOSHA KABUSHIKI KAISHA**
  **Aichi-ken 471-8571 (JP)**
- **TOYODA GOSEI CO., LTD.**
  **Nishikasugai-gun Aichi-ken (JP)**
  Designated Contracting States:
  **AT BE DE ES FR GB NL**

(72) Inventors:
- **Mouri, Makoto, c/o K.K. Toyota Chuo Kenkyusho**
  **Nagakute-cho, Aichi-gun, Aichi-ken (JP)**
- **Usuki, Arimitsu,**
  **c/o K.K. Toyota Chuo Kenkyusho**
  **Nagakute-cho, Aichi-gun, Aichi-ken (JP)**
- **Murase, Atsushi,**
  **c/o K.K. Toyota Chuo Kenkyusho**
  **Nagakute-cho, Aichi-gun, Aichi-ken (JP)**
- **Sato, Norio, c/o K.K. Toyota Chuo Kenkyusho**
  **Nagakute-cho, Aichi-gun, Aichi-ken (JP)**

- **Suzuki, Yasuyuki**
  **Toyota-shi, Aichi-ken, 471 (JP)**
- **Owaki, Masao**
  **Toyota-shi, Aichi-ken, 471 (JP)**
- **Watanabe, Kazuya**
  **Nishikamo-gun, Aichi-ken (JP)**
- **Honda, Hidenobu**
  **Ichinomiya-shi, Aichi-ken (JP)**
- **Nakashima, Katsumi**
  **Ichinomiya-shi, Aichi-ken (JP)**
- **Takeuchi, Katsumasa**
  **Ichinomiya-shi, Aichi-ken (JP)**
- **Ichikawa, Masayoshi**
  **Ichinomiya-shi, Aichi-ken (JP)**

(74) Representative:
**Blumbach, Kramer & Partner GbR**
**Radeckestrasse 43**
**81245 München (DE)**

(56) References cited:
EP-A- 0 657 263        EP-A- 0 744 436
GB-A- 871 925          US-A- 2 461 192

- DATABASE WPI Section Ch, Week 9430 Derwent Publications Ltd., London, GB; Class A35, AN 94-245555 XP002047404 & JP 06 179 215 A (FURUKAWA ELECTRIC CO LTD) , 28 June 1994

## EP 0 887 372 B1

**Description**

The present invention relates to a method of manufacturing devulcanized rubber, devulcanized rubber manufactured to recycle a discarded vulcanized rubber and a method of manufacturing reclaimed molded rubber products from the devulcanized rubber.

The conventional method is carried out as follows to recycle discarded vulcanized rubbers such as used tires, scraps generated in manufacturing molded rubber products, and discarded defective products. Initially, the vulcanized rubber is pulverized into coarse particles, and then devulcanizing treatment is performed; i.e., sulfuric crosslinking bonds in the vulcanized rubber are cut to form it into devulcanized rubber. Then, the devulcanized rubber is vulcanized and molded to obtain products having a desired shape.

A devulcanizing method called PAN method is known. In this conventional method, after chemical devulcanizing agent and reclaiming oil are added to the discarded vulcanized rubber, the mixture is treated in an autoclave at 200°C and a water vapor pressure of 14.5kg/cm$^2$.

The devulcanized rubber according to the conventional method is, however, poor in its quality. Reclaimed rubber products manufactured by vulcanizing the devulcanized rubber again and molding it into desired shapes do not have the rubber characteristic suitable for practical use.

In order to solve this problem, as an ordinary method of manufacturing molded rubber products from the devulcanized rubber, 20 - 30 parts by weight of the devulcanized rubber is added to 100 parts by weight of virgin unvulcanized rubber to form devulcanized rubber material, and then the devulcanized rubber material is vulcanized and molded to obtain reclaimed rubber products having desired shapes.

The molded rubber products processed from the devuicanized rubber thus obtained has the rubber characteristic suitable for practical use. But the conventional method is incapable of recycling a great amount of discarded vulcanized rubber such as automobile tires.

Thus, in the conventional method, virgin rubber must be mixed with devulcanized rubber to obtain reclaimed rubber having rubber characteristic suitable for practical use. EP 0 657 263 A1 discloses a further process for regeneration of rubber.

The present invention has been made in view of the above-described problems. It is accordingly an object of the present invention to provide a method of manufacturing devulcanized rubber which can be used alone as a material to be processed into molded rubber products having the rubber characteristic suitable for practical use, the corresponding devulcanized rubber, and a method of manufacturing molded rubber products from the devulcanized rubber.

This object is achieved by a method according to claim 1, a rubber according to claim 8, and a method according to claim 10.

Further improvements are given in the dependent claims.

The carbon black particles are contained in the form of agglomeration of primary particles in the devulcanized rubber in a normal state. In the present invention, the particle size of the carbon black stands for the size of the agglomeration. Shearing pressure will reduce the number of primary particles forming the agglomeration, leading to reduce the agglomeration size. In the present invention, the primary particle separated from the agglomeration is also considered as the carbon black particles.

Particles of carbon black having the above-described characteristic are finely dispersed in the devulcanized rubber according to the present invention. The carbon black contributes to maintaining the quality of the characteristic of reclaimed molded rubber products obtained by vulcanizing the devulcanized rubber and molding it into desired shapes.

As the rubber particles are adsorbed onto the carbon black surface, functioning as a kind of physical crosslinking point, the carbon black serves not only as a filler but also as a reinforcing material to link the rubber particles. Assuming that the amount of the added carbon black is the same as that of rubber, when the particle size of the carbon black is decreased to 100 nm or less, the number of the carbon black particles becomes larger to increase the number of the physical crosslinking points. Therefore reinforcing effect is further enhanced. This provides the devulcanized rubber with the same properties as those of virgin material. On the contrary, when the particle size of the carbon black is decreased, for example, to less than 5 nm, the surface area of the carbon black particle is reduced. As a result, the number of the rubber particles that can be adsorbed onto the carbon black surface is decreased, failing to serve as the physical crosslinking point.

With the effect of the above-characterized carbon black, the molded rubber product processed from the above-mentioned devulcanized rubber of the present invention has the rubber characteristic similar to that of a molded rubber product processed from virgin unvulcanized rubber, as shown in Tables 1 and 3.

This means that the reclaimed rubber of the present invention is not necessary to be mixed with virgin rubber for manufacturing molded products having practical rubber characteristics.

## DETAILED DESCRIPTION OF THE INVENTION

When the discarded vulcanized rubber is devulcanized, the sulfuric crosslinking bonds present therein are cut, but the main chains of the molecules of the vulcanized rubber remain in the devulcanized rubber. It is not necessary to cut all the sulfuric crosslinking bonds.

The above-described rubber characteristic means the elasticity of molded rubber products which can be indicated in terms of tensile strength, elongation at break and the like.

Coarse carbon black particles contained in the discarded vulcanized rubber are finely pulverized in devulcanizing treatment which will be described later.

In order to obtain the devulcanized rubber of the present invention, carbon black is added to the discarded vulcanized rubber before devulcanizing treatment is performed, if the vulcanized rubber does not contain carbon black.

The diameter of the carbon black particle to be added to the vulcanized rubber is greater than 100nm because primary carbon particles agglomerate with each other.

In the course of reclaiming, the viscosity of the rubber is increased to be higher than the virgin unvulcanized rubber by 100 times or more. A high shearing pressure (10 to 150 kg/cm$^2$) that cannot be exerted to the virgin unvulcanized rubber can be applied to the reclaimed rubber. The carbon black is likewise effected by such a high shearing pressure, resulting in reducing agglomeration thereof.

Sulfur or a sulfur compound is mixed with raw rubber which is an aggregate of long chain organic compounds having carbon main chains to form many types of sulfur crosslinking bonds such as -S- bond, -S-S- bond, -S-S-S- bond between carbon main chains of the raw rubber. In this manner, the vulcanized rubber having the property of elastomer or that of rubber is processed.

The chain organic compounds include natural rubber, butadiene rubber, isoprene rubber, butyl rubber, ethylenepropylene rubber, styrene-butadiene rubber, chloroprene rubber, nitrile rubber, acrylic rubber, epichlorohydrin rubber, chlorosulfonated polyethylene, chlorinated polyethylene and EPDM (ethylene-propylene-diene terpolymer).

Sulfur or a sulfur compound is mixed with natural rubber containing carbon chains to form many types of sulfur crosslinking bonds between the carbon chains of the natural rubber. In this manner, the vulcanized rubber having the property of elastomer or that of rubber is also processed.

In order to manufacture the devulcanized rubber of the present invention, the discarded vulcanized rubber is devulcanized at 180 °C - 350 °C by applying a shearing pressure of 10 - 150kg/cm$^2$.

In the devulcanizing treatment to be performed in the above-described condition, the sulfuric crosslinking bonds in the vulcanized rubber are cut, but the main chains of rubber molecules are not cut.

The devulcanizing treatment allows carbon black particles contained in the discarded vulcanized rubber to be pulverized to 100nm or less in diameter, thus preventing the rubber characteristic of the molded rubber product processed from the devulcanized rubber from being deteriorated.

If the vulcanized rubber is heated at a temperature lower than 180°C in the devulcanizing treatment, it takes long to cut the sulfuric crosslinking bonds. That is, it takes long to complete the devulcanizing treatment.

On the other hand, if the vulcanized rubber is heated at a temperature higher than 350°C in the devulcanizing treatment, there is a high possibility that the main chains in rubber molecules are cut, which leads to a high degree of deterioration in the rubber characteristic of the molded rubber product processed from the devulcanized rubber.

If the shearing pressure of less than 10kg/cm$^2$ is applied to the vulcanized rubber in the devulcanizing treatment, there is a high possibility that the carbon black particles are unfavorably prevented from becoming fine and being dispersed in the devulcanized rubber. The molded rubber product processed from the devulcanized rubber manufactured in this condition is not suitable for practical use. In this condition, the desirable molded rubber product cannot be processed from the reclaimed devulcanized rubber unless the vulcanized rubber is mixed with a large amount of virgin unvulcanized rubber. That is, when the devulcanizing treatment is carried out in this condition, the discarded vulcanized rubber cannot be recycled in a large quantity. Further, it takes long to cut sulfuric crosslinking bonds. That is, it takes long to complete the devulcanizing treatment.

On the other hand, if the shearing pressure higher than 150kg/cm$^2$ is applied to the vulcanized rubber in the devulcanizing treatment, the main chains in rubber molecules can be undesirably cut. Consequently, the molded rubber product processed from the devulcanized rubber could have a greatly deteriorated quality.

According to the present invention, an apparatus capable of applying a shearing force to the discarded vulcanized rubber and heating it is used.

As the apparatus, a twin screw extruder or a rubber roller can be used.

The vulcanizing treatment is performed for one to five minutes.

Preferably, chemical devulcanizing agent is added to the discarded vulcanized rubber in the devulcanizing treatment.

The chemical devulcanizing agent cuts sulfuric crosslinking bonds in the vulcanized rubber. The addition of the chemical devulcanizing agent to the vulcanized rubber allows the devulcanizing treatment to be accomplished at a temperature lower by about 20°C than the normal devulcanizing temperature, thus preventing the main chains of the rubber molecules from being cut.

The chemical devulcanizing agent is selected from at least one of diallyl disulfide, dixylyl disulfide, thiophenol, and iron oxide, etc.

Preferably, reclaiming oil is added to the vulcanized rubber of the discarded products in the devulcanizing treatment.

The reclaiming oil is compatible with the vulcanized rubber. As a result of the addition of the reclaiming oil to the vulcanized rubber, the vulcanized rubber swells. Consequently, the cutting of the sulfuric crosslinking bonds in the vulcanized rubber can be accelerated.

The use of the reclaiming oil allows the devulcanizing treatment to be completed in a short period of time, thus preventing the cutting of the main chains of the rubber molecules.

The reclaiming oil can be selected from at least one of paraffinic process oils and naphthenic process oils, etc.

Various kinds of additives which are used in the conventional devulcanizing treatment may be utilized in the devulcanizing treatments of the present invention. The additives include carbon black, zinc oxide, stearic acid, and the like.

The discarded vulcanized rubber, if it is EPDM, is preferably devulcanized at 280 - 330°C by applying a shearing pressure of 10-50kg/cm$^2$ thereto.

The effective network chain density of the devulcanized rubber thus obtained by the devulcanizing treatment of the present invention is approximately 10 - 25 % compared to the rubber before devulcanizing. This means that the network structure remains in this devulcanized rubber.

The reclaimed rubber product by the present invention has a complex and dense network structure in contrast to a rubber product produced by vulcanizing and molding virgin unvulcanized rubber. Thus, the reclaimed rubber product of the present invention has higher quality than the usual rubber product has.

The present invention discloses above the method for producing a devulcanized rubber suitable for a raw material of a reclaimed rubber product having excellent characteristics even though it is used as a single ingredient.

"EPDM" of the present invention is ethylene-propylene-diene terpolymer whose hydrocarbon main chain is a copolymer of ethylene, propylene and diene. The double bonds involved in the vulcanization are not located in the hydrocarbon main chain but in side chains. The diene is 5-ethylidene-2-norbornene dicyclopentadiene or the like.

EPDM is produced by mixing a raw rubber having above carbon main chains and sulfur or sulfuric compounds. It has -s-, -s-s-, -s-s-s- bond or the like as sulfur bridges between the carbon main chains to exhibit properties of elastomer or rubber.

The "network structure" means a three-dimensional network structure where -s-, -s-s-, -s-s-s- or the like bridges between rubber molecules.

If the vulcanized rubber is heated at a temperature lower than 280°C in the devulcanizing treatment. the obtained reclaimed rubber is a little less devulcanized and could lose some elasticity such as elongation. If the vulcanized rubber is heated at a temperature higher than 330°C, the network concentration may be less than 10 %. The reclaimed rubber product produced under this condition may be equivalent in its property to the rubber product produced by vulcanizing and molding usual virgin unvulcanized rubber.

If the shearing pressure of less than 10 kg/cm$^2$ is applied to the vulcanized rubber in devulcanizing. the carbon black particles may be unfavorably prevented from becoming fine and being dispersed in the devulcanized rubber. The molded rubber product produced from the devulcanized rubber manufactured in this condition is not suitable for practical use. In this condition, further, the preferable molded rubber product cannot be produced from the reclaimed rubber without mixing it with a large amount of virgin unvulcanized rubber. That is, when the devulcanizing treatment is carried out in this condition, the discarded vulcanized rubber cannot be recycled sufficiently. Further, it elongates the completion of the devulcanizing treatment because it takes long to cut sulfuric crosslinking bonds.

On the other hand, if the shearing pressure higher than 50 kg/cm$^2$ is applied to the vulcanized rubber in the devulcanizing treatment, the network concentration may be 10% or less compared to the rubber before devulcanizing. The reclaimed rubber product produced in this condition may be almost equivalent in its property to the rubber product obtained by vulcanizing and molding usual virgin unvulcanized rubber.

According to a method of manufacturing molded rubber products of reclaimed rubber comprises the steps (a) or (b); (a) preparing a material of devulcanized rubber in which sulfuric crosslinking bonds are cut and which contains carbon black particles having diameters 100nm or less, or (b) preparing a material of a mixture of devulcanized rubber and virgin unvulcanized rubber; and vulcanizing and molding the material of the devulcanized rubber into desired shapes.

The above-described manufacturing method is an example to utilize the devulcanized rubber of the present invention.

The rubber product obtained by molding only the devulcanized rubber of the present invention has the similar rubber characteristic as that of a molded rubber product processed from virgin unvulcanized rubber alone.

The molded rubber product obtained by mixing the devulcanized rubber of the present invention and virgin unvulcanized rubber with each other at a desired ratio has also the similar rubber characteristic as that of the molded rubber product processed from the virgin unvulcanized rubber alone.

The above-described method is capable of recycling a large amount of discarded vulcanized rubber products such as automobile tires.

Various vulcanizing agents consisting of sulfur and peroxide can be used in the vulcanizing treatment. The method of vulcanizing and molding the devulcanized rubber can be carried out similarly to that of vulcanizing and molding virgin unvulcanized rubber.

## EXAMPLES

Description will be made below on the devulcanized, namely, reclaimed rubber according to the embodiments of the present invention; the method of manufacturing the devulcanized rubber according to the embodiments; and the method of manufacturing molded rubber products from the reclaimed rubber according to the embodiments.

In the devulcanized rubber according to the present invention, sulfuric crosslinking bonds are cut, and the diameters of carbon black particles contained therein are 100 nm or less.

The method of manufacturing the devulcanized, namely, reclaimed rubber will be described below.

Initially, discarded vulcanized rubber is pulverized. The pulverized rubber is introduced into a twin screw extruder in which the diameter of a screw was 30mm and its length was 1260 mm, and a shearing pressure is applied thereto while it is being heated to devulcanize it. Then, the devulcanized rubber is cooled. In this manner, the devulcanized rubber in the form of strand is obtained.

In the method of manufacturing a molded rubber product from the devulcanized rubber, initially, the following substances are added to 100 parts by weight of devulcanized rubber: 0.5 parts by weight of sulfur; 1.7 parts by weight of zinc oxide; 0.3 parts by weight of stearic acid; 0.67 parts by weight of NOCCELER TT; and 0.17 parts by weight of NOCCELER M.

NOCCELER TT : Tetramethylthiurarmdisulfide;

NOCCELER M : 2-Mercaptobenzothiazole

These are trademarks of OUCHISHINKO CHEMICAL INDUSTRIAL CO., LTD.

The substances are mixed with each other to form a material to be molded into a reclaimed rubber product.

Thereafter, the material is molded by a press machine to obtain the molded reclaimed rubber product.

Description will be made below on specimens 1 - 6 and E1 to E7 made of devulcanized rubber of the present invention and comparison specimens C1 to C4 also made of devulcanized rubber were prepared. With reference to Tables 1 - 3, description will be also made below on the rubber characteristic of molded rubber products processed from the specimens 1 - 6 and E1 to E7 and from the comparison specimens C1 to C4.

Discarded rubber products made of EPDM was devulcanized to form the specimens 1 - 3 and E1 to E7, and the comparison specimen C1, C3 and C4, whereas rubber of discarded products made of butyl rubber was devulcanized to form the specimens 4 - 6 and the comparison specimen C2.

As described above, the devulcanized rubber of the specimen 1 was prepared as follows: The vulcanized rubber of the discarded products was pulverized. The pulverized rubber was introduced into a twin screw extruder in which the diameter of a screw was 30mm and its length was 1260mm. Then, a shearing pressure was applied thereto while it was being heated to devulcanize it. The throughput capacity of the extruder was 5kg per hour.

The specimens 2 and 3 were prepared as in the case of the specimen 1 except that the specimen 2 was made of one part by weight of chemical devulcanizing agent (diallyl disulfide) mixed with 100 parts by weight of the vulcanized rubber of the discarded products in devulcanizing the specimen 2; and that the specimen 3 was made of 10 parts by weight of reclaiming oil (process oil) mixed with 100 parts by weight of the vulcanized rubber of the discarded products in devulcanizing the specimen 3.

The devulcanized rubber of the specimens 4, 5, and 6 was prepared in the same condition as that of the specimens 1, 2, and 3, respectively. As described above, the material of the specimens 4 - 6 was vulcanized butyl rubber. The shearing pressure, the temperature, and the period of time in the devulcanizing treatment are indicated in Table 1.

Assuming that reclamation is executed through the extruder, the shearing pressure is obtained from the following equation:

$$\text{Shearing pressure} = \eta \times 2\pi r N_S / d$$

where r is a diameter of the screw, $N_S$ is the number of screw revolution, d is the clearance between the screw and the cylinder, and $\eta$ is the viscosity at shearing speed that can be directly measured or calculated through insertion.

The specimens E1 to E7 were prepared in the same condition as that of the specimen 1 except that the shearing pressure and the temperature in the devulcanizing treatment were varied in the respective ranges from 10 to 100 kg/cm$^2$ and from 250 to 350°C.

The devulcanized rubber of the comparison specimens C1, C3 and C4 were prepared in the same method as that of the specimen 1. As described above, the material of the comparison specimen C2 was vulcanized butyl rubber.

The shearing pressure, the temperature, and the period of time in the devulcanizing treatment for comparison specimens C1 - C4 are indicated in Table 2.

Mooney viscosities of the specimens 1 - 6 and E1 - E7 and the comparison specimens C1 - C4 were measured. The results are shown in Tables 1, 2 and 3. The average diameters of carbon black particles of the specimens 1 - 6 and E1 - E7 and the comparison specimens C1 - C4 were measured with an electron microscope. The results are also shown in Tables 1 to 3.

The additives described previously were added to the specimens 1 - 6 and E1 - E7 and the comparison specimens C1-C4 to form them into materials of reclaimed rubber. Then, the materials were introduced into a pressing machine to form sheets, the dimension of each of which was 5mm in thickness, and 30cm by 30cm. Dumbbell specimens were used to measure the tensile strength and the elongation at break of each of the specimens 1 - 6, E1 - E7 and the comparison specimens C1 - C4 in accordance with JIS-K6301 (experimental condition).

Table 4 shows the tensile strength and the elongation at break of molded rubber products prepared by vulcanizing and molding two materials of virgin unvulcanized rubber one containing EPDM, and another containing butyl rubber. The two materials were vulcanized and molded in the same manner to that of the specimens 1 - 6, E1 - E7 and the comparison specimens C1 - C4 to obtain reclaimed molded rubber products denoted by reference numerals 1 and 2.

The results of the measurements are described below with reference to Tables 1 to 4.

The Mooney viscosities of the devulcanized rubber of the specimens 1 - 6 and E1 - E7 were low, which indicates that sulfuric crosslinking bonds of the vulcanized rubber were cut sufficiently by the devulcanizing treatment performed in the condition shown in Tables 1 and 3. The diameters of particles of the carbon black contained in the devulcanized rubber of the specimens 1 - 6 and E1 - E7 were mainly 40 - 60nm.

It was also found that the vulcanized rubber of the specimens 2 and 5 were devulcanized at a temperature lower than that at which the vulcanized rubber of the specimens 1 and 4 were devulcanized. It was also found that the vulcanized rubber of the specimens 3 and 6 were devulcanized in a period of time shorter than that in which the vulcanized rubber of the specimens 1 and 4 were devulcanized. These results indicate that the addition of either the chemical devulcanizing agent or the reclaiming oil to the vulcanized rubber of discarded products before devulcanizing allowed the vulcanized rubber to be devulcanized with a higher efficiency.

The tensile strength and the elongation at break of the products by vulcanizing and molding the devulcanized rubber of the specimens 1 - 3 were almost equal to those of the product denoted by the reference specimen 1 shown in Table 4. That is, Table 4 indicates that the molded reclaimed rubber products processed from the devulcanized rubber of the specimens 1 - 3 have the same rubber characteristic as that of the rubber product obtained by vulcanizing and molding the virgin unvulcanized rubber.

The tensile strength and the elongation at break of the sheets processed by vulcanizing and molding the devulcanized rubber of the specimens 4 - 6 were also almost equal to those of the product denoted by the reference specimen 2 shown in Table 4. That is, Table 4 indicates that the molded reclaimed rubber products processed from the devulcanized rubber of the specimen 4 - 6 have the same rubber characteristic as that of the molded rubber product obtained by vulcanizing and molding the virgin unvulcanized rubber.

The elongation at break of the reclaimed rubber molded products prepared by vulcanizing and molding the specimens E1 - E7 each formed of EPDM was similar to that of other specimens irrespective of the temperature and shearing pressure at the reclamation. Each tensile strength of specimens E1, E2, E5 and E6 was almost equivalent to that of the rubber molded product formed from the virgin unvulcanized rubber in the same manner for producing the specimen 1.

It is the most preferable that the rubber molded product formed of EPDM material is reclaimed at the temperature ranging from 280 to 330°C and the shearing pressure ranging from 10 to 50 kg/cm$^2$.

The Mooney viscosities of the devulcanized rubber of the comparison specimens C1 and C2 were high, which indicates that sulfuric crosslinking bonds of the vulcanized rubber were not cut sufficiently by the devulcanizing treatment performed in the condition shown in Table 2. The diameters of particles of the carbon black contained in the devulcanized rubber of the comparison specimens C1 and C2 were mainly 190 - 200nm.

Further, the tensile strength and the elongation at break of the products processed by vulcanizing and molding the devulcanized rubber of the comparison specimens C1 and C2 were lower than those of the products denoted by the reference specimens 1 and 2 shown in Table 4. That is, Table 4 indicates that the molded rubber products processed from the devulcanized rubber of the comparison specimens C1 and C2 do not have the rubber characteristic suitable for practical use.

Each of the specimens C3 and C4 as the devulcanized rubber had considerable low Mooney viscosity, decreasing the molecular weight owing to cut of the main chain. The above phenomenon can be supported by the fact that both tensile strength of the devulcanized rubber molded product prepared by vulcanizing the specimens C3 and C4 were too low to provide properties sufficient to be suitable for practical use.

The present invention provides devulcanized rubber which can be used alone as a material to be processed into molded rubber products having the rubber characteristics suitable for practical use; a method of manufacturing the devulcanized rubber; and a method of manufacturing molded rubber products from the devulcanized rubber.

Table 1

| Specimen No. | 1 | 2 | 3 | 4 | 5 | 6 |
|---|---|---|---|---|---|---|
| Discarded vulcanized rubber | EPDM | EPDM | EPDM | Butyl rubber | Butyl rubber | Butyl rubber |
| Chemical devulcanizing agent | Not added | 1 part by wt. | Not added | Not added | 1 part by wt. | Not added |
| Reclaiming oil | Not added | Not added | 10 parts by wt. | Not added | Not added | 10 parts by wt. |
| Shearing pressure (kg/cm$^2$) | 50 | 50 | 50 | 50 | 50 | 50 |
| Temperature (°C) | 300 | 270 | 300 | 200 | 190 | 200 |
| Period of time (minute) | 4 | 4 | 2 | 4 | 4 | 2 |
| Throughput capacity (kg/hour) | 5 | 5 | 5 | 5 | 5 | 5 |
| Mooney viscosity (ML1+4, 100°C) | 60 | 50 | 45 | 60 | 50 | 50 |
| Average diam. of CB particle (nm) | 50 | 60 | 60 | 40 | 50 | 60 |
| Tensile strength (kg/cm$^2$) | 200 | 180 | 170 | 150 | 130 | 130 |
| Elongation at break (%) | 650 | 680 | 700 | 600 | 650 | 680 |

Table 2

| Specimen No. | C1 | C2 | C3 | C4 |
|---|---|---|---|---|
| Discarded vulcanized rubber | EPDM | Butyl rubber | EPDM | EPDM |
| Chemical devulcanizing agent | Not added | Not added | Not added | Not added |
| Reclaiming oil | Not added | Not added | Not added | Not added |
| Shearing pressure (kg/cm$^2$) | 5 | 5 | 20 | 180 |
| Temperature (°C) | 200 | 250 | 370 | 300 |
| Period of time (minute) | 4 | 4 | 4 | 4 |
| Throughput capacity (kg/hour) | 5 | 5 | 5 | 5 |
| Mooney viscosity (ML1+4 100°C) | 120 | 140 | 20 | 15 |
| Average diam. of CB particle (nm) | 200 | 190 | 50 | 50 |

Table 2   (continued)

| Specimen No. | C1 | C2 | C3 | C4 |
|---|---|---|---|---|
| Tensile strength (kg/cm$^2$) | 80 | 60 | 40 | 60 |
| Elongation at break (%) | 200 | 150 | 20 | 640 |

Table 3

| Specimen No. | E1 | E2 | E3 | E4 | E5 | E6 | E7 |
|---|---|---|---|---|---|---|---|
| Discarded vulcanized rubber | EPDM | EPDM | EPDM | EPDM | EPDM | EPDM | EPDM |
| Chemical devulcanizing agent | Not added | Not added | Not added | Not added | Not added | Not added | Not added |
| Reclaiming oil | Not added | Not added | Not added | Not added | Not added | Not added | Not added |
| Shearing pressure (kg/cm$^2$) | 10 | 30 | 100 | 20 | 20 | 20 | 20 |
| Temperature (°C) | 300 | 300 | 300 | 250 | 280 | 330 | 350 |
| Period of time (minute) | 4 | 4 | 4 | 4 | 4 | 4 | 4 |
| Throughput capacity (kg/hour) | 5 | 5 | 5 | 5 | 5 | 5 | 5 |
| Mooney viscosity (ML1+4, 100°C) | 75 | 65 | 50 | 80 | 75 | 65 | 55 |
| Average diam. of CB particle (nm) | 50 | 50 | 50 | 50 | 50 | 50 | 50 |
| Tensile strength (kg/cm$^2$) | 200 | 200 | 140 | 140 | 200 | 200 | 140 |
| Elongation at break (%) | 680 | 690 | 670 | 600 | 680 | 700 | 670 |

Table 4

| Specimen No. | Reference specimen 1 | Reference specimen 2 |
|---|---|---|
| Virgin unvulcanized rubber | EPDM | Butyl rubber |
| Tensile strength (kg/cm$^2$) | 200 | 160 |
| Elongation at break (%) | 670 | 610 |

## Claims

1.  A method of manufacturing devulcanized rubber comprising the steps of:

    (a) pulverizing vulcanized rubber;
    (b) heating the pulverized vulcanized rubber in the temperature range of 180°C to 350°C; and
    (c) applying a shearing pressure in the pressure range of 10 to 150 kg/cm$^2$ to the pulverized vulcanized rubber,

    thereby preparing devulcanized rubber comprising rubber with sulfur crosslinks thereof severed and carbon black particles of 100 nm or less in diameter, with the proviso that in case the vulcanized rubber does not contain carbon black, carbon black is added to the vulcanized rubber.

2. The method according to claim 1, wherein the diameter of said carbon black particles is 5 nm or more.

3. The method according to claim 1 or 2, further comprising the step of adding a chemical devulcanizing agent and/or reclaiming oil to the vulcanized rubber.

4. The method according to any of claims 1 to 3, wherein the vulcanized rubber is EPDM (ethylene propylene diene terpolymer), the temperature range is from 280°C to 330°C, and the pressure range is from 10 to 50 kg/cm$^2$.

5. The method according to any of claims 1 to 3, wherein the vulcanized rubber is natural rubber, the temperature range is from 200°C to 270°C, and the pressure range is from 10 to 50 kg/cm$^2$.

6. The method according to any of claims 1 to 3, wherein the vulcanized rubber is styrene butadiene rubber, the temperature range is from 200°C to 270°C, and the pressure range is from 10 to 50 kg/cm$^2$.

7. The method according to any of claims 1 to 3, wherein the vulcanized rubber is butyl rubber, the temperature range is from 180°C to 250°C, and the pressure range is from 10 to 30 kg/cm$^2$.

8. Devulcanized rubber, comprising
    rubber with sulfur crosslinks thereof severed, and
    carbon black particles of 100 nm or less in diameter,
    which is manufactured by a method according to one of claims 1 to 7.

9. The devulcanized rubber of claim 8, wherein the diameter of said carbon black particles is 5 nm or more.

10. A method of manufacturing molded rubber products of devulcanized rubber comprising the steps of:

    (a) vulcanizing devulcanized rubber of claim 8 or 9; and
    (b) molding the vulcanized rubber obtained in the step (a) to a desired shape.

11. The method according to claim 10, further comprising the step of adding virgin unvulcanized rubber to the devulcanized rubber prior to the step (a).

**Patentansprüche**

1. Ein Verfahren zur Herstellung von devulkanisiertem Kautschuk, das die Schritte umfasst:

    (a) Pulverisieren von vulkanisiertem Kautschuk;
    (b) Erhitzen des pulverisierten vulkanisierten Kautschuks im Temperaturbereich von 180°C bis 350°C; und
    (c) Ausüben eines Scherdrucks im Druckbereich von 10 bis 150 kg/cm$^2$ auf den pulverisierten vulkanisierten Kautschuk,

    wodurch ein devulkanisierter Kautschuk hergestellt wird, der Kautschuk umfasst, dessen Schwefelvernetzungen gebrochen sind und der Rußteilchen mit einem Durchmesser von 100 nm oder weniger aufweist, mit der Maßgabe, dass dann, wenn der vulkanisierte Kautschuk keinen Ruß enthält, dem vulkanisierten Kautschuk Ruß zugesetzt wird.

2. Verfahren nach Anspruch 1, bei dem der Durchmesser der Rußteilchen 5 nm oder mehr beträgt.

3. Verfahren nach Anspruch 1 oder 2, das ferner den Schritt des Zugebens eines chemischen Devulkanisierungsmittels und/oder eines regenerierten Öls zu dem vulkanisierten Kautschuk umfasst.

4. Verfahren nach einem der Ansprüche 1 bis 3, bei dem der vulkanisierte Kautschuk ein EPDM (Ethylen-Propylen-Dien-Terpolymer) ist, der Temperaturbereich bei 280°C bis 330°C liegt und der Druckbereich bei 10 bis 50 kg/cm$^2$ liegt.

5. Verfahren nach einem der Ansprüche 1 bis 3, bei dem der vulkanisierte Kautschuk ein Naturkautschuk ist, der Temperaturbereich bei 200°C bis 270°C liegt und der Druckbereich bei 10 bis 50 kg/cm$^2$ liegt.

6. Verfahren nach einem der Ansprüche 1 bis 3, bei dem der vulkanisierte Kautschuk Styrol-Butadien-Kautschuk ist, der Temperaturbereich bei 200°C bis 270°C liegt und der Druckbereich bei 10 bis 50 kg/cm$^2$ liegt.

7. Verfahren nach einem der Ansprüche 1 bis 3, bei dem der vulkanisierte Kautschuk ein Butylkautschuk ist, der Temperaturbereich bei 180°C bis 250°C liegt und der Druckbereich bei 10 bis 30 kg/cm$^2$ liegt.

8. Devulkanisierter Kautschuk, der Kautschuk umfasst, dessen Schwefelvernetzungen gebrochen sind und der Rußteilchen mit einem Durchmesser von 100 nm oder weniger aufweist, und der mit einem Verfahren nach einem der Ansprüche 1 bis 7 hergestellt ist.

9. Devulkanisierter Kautschuk nach Anspruch 8, bei dem der Durchmesser der Rußteilchen 5 nm oder mehr beträgt.

10. Ein Verfahren zur Herstellung von geformten Kautschukprodukten aus devulkanisiertem Kautschuk, das die Schritte umfasst:

   (a) Vulkanisieren von devulkanisiertem Kautschuk nach Anspruch 8 oder 9; und
   (b) Formen des in Schritt (a) erhaltenen vulkanisierten Kautschuks zu einer gewünschten Form.

11. Verfahren nach Anspruch 10, das vor dem Schritt (a) ferner den Schritt des Zugebens von frischem unvulkanisierten Kautschuk zu dem devulkanisierten Kautschuk umfasst.


**Revendications**

1. Procédé de production de caoutchouc dévulcanisé comprenant les stades qui consistent :

   (a) à réduire en poudre du caoutchouc vulcanisé ;
   (b) à porter le caoutchouc vulcanisé réduit en poudre à une température allant de 180°C à 350°C ; et
   (c) à appliquer une pression de cisaillement allant de 10 à 150 kg/cm$^2$ au caoutchouc vulcanisé réduit en poudre,

   en préparant ainsi du caoutchouc dévulcanisé comprenant du caoutchouc dont les liaisons de réticulation de soufre sont coupées et des particules de noir de carbone d'un diamètre de 100 nm ou d'un diamètre inférieur à 100 nm, sous réserve que, dans le cas où le caoutchouc vulcanisé ne contient pas du noir de carbone, on ajoute du noir de carbone au caoutchouc vulcanisé.

2. Procédé suivant la revendication 1, dans lequel le diamètre des particules de noir de carbone est de 5 nm ou est supérieur à 5 nm.

3. Procédé suivant la revendication 1 ou 2, comprenant en outre le stade qui consiste à ajouter un agent chimique de dévulcanisation et/ou une huile de régénération au caoutchouc vulcanisé.

4. Procédé suivant l'une quelconque des revendications 1 à 3, dans lequel le caoutchouc vulcanisé est de l'EPDM (terpolymère d'éthylène de propylène ou de diène), la température est comprise entre 280°C et 330°C, et la pression est comprise entre 10 et 50 kg/cm$^2$.

5. Procédé suivant l'une quelconque des revendications 1 à 3, dans lequel le caoutchouc vulcanisé est du caoutchouc naturel, la température est comprise entre 200°C et 270°C, et la pression est comprise entre 10 et 50 kg/cm$^2$.

6. Procédé suivant l'une quelconque des revendications 1 à 3, dans lequel le caoutchouc vulcanisé est du caoutchouc styrène-butadiène, la température est comprise entre 200°C et 270°C, et la pression est comprise entre 10 et 50 kg/cm$^2$.

7. Procédé suivant l'une quelconque des revendications 1 à 3, dans lequel le caoutchouc vulcanisé est du caoutchouc butyle, la température est comprise entre 180°C et 250°C, et la pression est comprise entre 10 et 30 kg/cm$^2$.

8. Caoutchouc dévulcanisé, comprenant :

du caoutchouc dont les liaisons de réticulation de soufre sont coupées, et

des particules de noir de carbone d'un diamètre de 100 nm ou d'un diamètre inférieur à 100 nm,

qui est produit par un procédé suivant l'une des revendications 1 à 7.

9. Caoutchouc dévulcanisé suivant la revendication 8, dans lequel le diamètre des particules de noir de carbone est de 5 nm ou est supérieur à 5 nm.

10. Procédé de production de produits moulés en caoutchouc dévulcanisé comprenant les stades qui consistent :

(a) à vulcaniser du caoutchouc dévulcanisé de la revendication 8 ou 9 ; et
(b) à mouler le caoutchouc vulcanisé obtenu au stade (a) à la forme souhaitée.

11. Procédé suivant la revendication 10, comprenant en outre le stade qui consiste à ajouter du caoutchouc vierge non vulcanisé au caoutchouc dévulcanisé avant le stade (a).